(19) Europäisches Patentamt / European Patent Office / Office européen des brevets

(11) EP 2 071 281 A1

(12) EUROPEAN PATENT APPLICATION

(43) Date of publication:
17.06.2009 Bulletin 2009/25

(51) Int Cl.:
$G01C\ 7/04^{(2006.01)}$      $G01W\ 1/14^{(2006.01)}$

(21) Application number: 07122751.6

(22) Date of filing: 10.12.2007

(84) Designated Contracting States:
AT BE BG CH CY CZ DE DK EE ES FI FR GB GR
HU IE IS IT LI LT LU LV MC MT NL PL PT RO SE
SI SK TR
Designated Extension States:
AL BA HR MK RS

(71) Applicant: ViewServe AB
917 31 Dorotea (SE)

(72) Inventor: Lövbrand, Anders
187 73, TÄBY (SE)

(74) Representative: Edlund, Fabian
Awapatent AB
P.O. Box 11394
404 28 Göteborg (SE)

(54) **Varying snow depth monitoring system and method**

(57)     The present invention relates to a varying snow depth monitoring system (1) comprising a mobile monitoring device (3) including a positioning system (5) arranged to determine a position $(x_1,y)$ of the monitoring device, and an altitude gauge (6) arranged to detect an altitude ($z_{detected}$) of the monitoring device in said position, and a processing circuitry (7) arranged to compare the detected altitude with a previous altitude at said position, in order to enable monitoring varying snow depth change (d), as the mobile monitoring device is maneuvered over a selected snow covered surface (4). The altitude gauge is an air pressure altimeter, the monitoring system further comprises an air pressure reference altimeter (11), and the processing circuitry is adapted to receive calibration data (k) from the reference altimeter and calibrate the detected altitude based on the calibration data.

The present invention also relates to a varying snow depth monitoring system (1'), comprising a tilt sensor arranged for measuring an angle θ between a normal direction of a mobile monitoring device and a vertical direction. A processing circuitry is adapted to calculate a snow depth change in the normal direction by multiplying a determined snow depth change with cos θ.

By detecting the altitude and subsequently the varying snow depth change by the use of altimeters, a more cost effective solution is suggested.

Fig. 1A

## Description

Technical Field of the Invention

The present invention relates to a varying snow depth monitoring system and a method for monitoring varying snow depth employing such a system.

Background Art

Skiing resorts rely on visiting skiers, who acquire lift tickets or perhaps season passes to gain access to extensive skiing systems in the mountains. In order to attract skiers, the skiing resorts thus need to keep the slopes in satisfactory shape, why often, at the end of each skiing day, a number of ski slope groomers are sent onto the mountain trails to smooth the trails in preparation for the next day's skiing. The slope groomers move or distribute snow from one location where it has accumulated to another which has become bare from use. To do this effectively, the groomers need to be able to measure snow accumulation or depth of snow at particular positions.

Additionally, to be able to keep as many ski slopes open as possible, the ski resorts commonly provide machine made snow to the slopes. Providing this machine made snow is expensive, as it involves transporting compressed air and water up the mountain. Consequently, in order to keep expenses down, the ski resorts strive to provide machine made snow only where necessary. Thus, the depth of snow needs to be measured to identify the areas lacking a satisfactory snow depth.

Traditionally, snow depth has been measured using only GPS (Global Positioning System) systems. For instance, US 5,761,095 describes a system for monitoring the dept of snow, by employing a real time kinematic (RTK) GPS system. In RTK systems, high accuracy is achieved by using a combination of differential GPS (DGPS) correction data, transmitting GPS signal phase information and ambiguity resolution techniques via statistical tests processing in real-time. Subsequently, the system described in US 5,761,095 requires in addition to the RTK rover unit, preferably located on a roving vehicle (e.g. a slope groomer), a RTK base unit located at a fixed location with known coordinates, which RTK base unit comprises a satellite receiver antenna, a RTK GPS base receiver and processor, a radio modem transmit antenna and the like. While effective in providing a satisfying snow dept accuracy, it is however expensive as the elevation, which accuracy is crucial, is determined through the means of the expensive RTK GPS equipment.

WO 01/16560 describes how the depth of snow can be measured using an alternative approach. In WO 01/16560, GPS is employed for establishing the position of a rover unit meanwhile a ground penetrating radar (GPR) is employed for determination of snow depth.

However, measuring, recording, and mapping snow depth at particular positional coordinates using a radar system in cooperation with a GPS system is likewise an expensive solution, why consequently, there is a need for a high accuracy varying snow depth monitoring system which is more cost effective than solutions presented in prior art.

Summary of the Invention

It is therefore an object of the present invention to provide a cost effective varying snow depth monitoring system and a method for monitoring varying snow depth employing such a system.

According to a first aspect of the invention, this and other objects are overcome by a varying snow depth monitoring system comprising a mobile monitoring device including a positioning system arranged to determine a position in terms of longitude and latitude coordinates of the monitoring device, and an altitude gauge arranged to detect an altitude of the monitoring device in said position, and a processing circuitry arranged to compare the detected altitude with a previous altitude at said position, determined from previously recorded altitude data, in order to enable monitoring varying snow depth, as the mobile monitoring device is maneuvered over a selected snow covered surface. The altitude gauge is an air pressure altimeter, and the monitoring system further comprises an air pressure reference altimeter positioned at a known altitude, and the processing circuitry is adapted to receive calibration data from the reference altimeter and calibrate the detected altitude based on the calibration data.

According to a second aspect of the invention, there is provided a method for monitoring varying snow depth change, comprising determining a position in terms of longitude and latitude coordinates of a mobile monitoring device, detecting an altitude of the mobile monitoring device in said position using an air pressure altimeter, calibrating the detected altitude using calibration data from a reference air pressure altimeter, located at a known altitude, and comparing the calibrated altitude with a previous altitude at said position, determined from previously recorded altitude data.

By detecting the altitude and subsequently the varying snow depth change by the use of altimeters, a more cost effective solution is suggested.

Altimeters are affected by weather conditions, as air pressure varies with temperature. The monitoring system according to the present invention is therefore provided with double altimeters. The reference altimeter is located at a known altitude, preferably with similar weather and air pressure conditions as to which the altimeter in the mobile monitoring device is exposed. This reference altimeter is used to calibrate the detected altitude of the altimeter in the mobile monitoring device, i.e. to correct a reading from the altimeter based on current weather conditions, by supplying calibration data.

Since the altitude of the reference altimeter is known, a ratio between detected and actual altitude can be determined, and used as correction data. Given the altimeter in the mobile monitoring device is within reasonable distance from the reference altimeter, this ratio can be assumed to be equivalent for the altimeters, why the ratio determined using the reference altimeter can be used to accurately adjust the detected altitude of the altimeter in the mobile monitoring device.

Employing an altimeter in the mobile monitoring device and a reference altimeter to monitor varying snow depth, according to the present inventive concept, thus presents a high accuracy solution as well as a cost effective one. The previous altitude can represent the ground surface. Such ground surface data is for instance conducted by maneuvering a lawn mover, to which the mobile monitoring device is mounted, over the selected surface. Alternatively, the previous altitude can represent a snow-covered surface, e.g. collected by the slope groomer the day before or earlier in the season.

The comparison of the current altitude with a previous altitude at said position is consequently made to the corresponding previously recorded altitude data considered being most suitable. The processing circuitry can be comprised in the mobile monitoring device, and adapted to receive said calibration data from the reference altimeter over a wireless communication link. Alternatively, the processing circuitry can be located remotely from said mobile monitoring device, and adapted to receive said detected altitude from said mobile monitoring device over a wireless communication link. As the reference altimeter by definition is located at a distance from the mobile device, wireless transmission makes the system more practical to use. Commercially available systems such as radio, GSM and Bluetooth and the like can be used, providing a cost effective solution.

The location of the processing circuitry in the mobile device or in connection to the reference altimeter is chosen based on application. For example, the processing circuitry can be located in a lab appropriately set up for analysis. In this case, the analysis can be performed while taking advantage of the robust conditions a lab offers. In order to determine the variations in the varying snow depth across a selected area, a plurality of measurements is needed. For this reason, a plurality of positions and corresponding altitudes, collected at predefined intervals, can be stored as a surface data collection.

Depending on the current conditions, the criteria appropriate for the predefined intervals to perform measurements as the monitoring device is maneuvered over the selected area, can vary. Thus, according to one embodiment, the predefined intervals are based on a specific time to elapse between the recurring collections of the position and the corresponding altitude of the mobile monitoring device.

Alternatively, in accordance with another embodiment, the distance the monitoring device has been maneuvered can be preferred as criteria, in which case the predefined intervals are based on the distance the slope groomer has traveled, should the monitoring device be mounted to one.

The varying snow depth monitoring system can further comprise a presentation device, for presentation of the snow surface terrain based on the surface data collection. By displaying a representation of the snow surface terrain, the viewer can easily perceive the varying snow depth change across a snow covered area, thus allowing the slope groomers to use tillers or plows to efficiently groom the snow into desired snow distributions.

The positioning system can be a Global Positioning System (GPS). As the GPS system is a commercially available system, this represents a well-tried and cost effective solution.

In order to contribute to high accuracy altitude measurements of the altimeter in the mobile monitoring device, the altimeter is preferably, prior to use, calibrated at the location of the reference altimeter. This initial calibration performed, for instance, prior to each round of measurements for a selected area, is carried out by calibrating the detected altitude of the altimeter in the mobile monitoring device to the known altitude indicated by the reference altimeter.

According to a third aspect of the invention, there is provided a method for monitoring varying snow depth change, comprising determining a position in terms of longitude and latitude coordinates of a mobile monitoring device, detecting an altitude of the mobile monitoring device in the position, measuring, using a tilt sensor, an angle between a normal direction of the mobile monitoring device stretching towards an estimated normal plane of the surface across which the device is maneuvered, and the vertical direction of the mobile monitoring device, and calculating, based on the angle, a more accurate snow depth change in the normal direction by multiplying the snow depth change in the vertical direction with $\cos \theta$.

Additionally, there is provided a varying snow depth monitoring system comprising a mobile monitoring device including a positioning system arranged to determine a position in terms of longitude and latitude coordinates of the monitoring device, and an altitude gauge arranged to detect an altitude of the monitoring device in the position, and a processing circuitry arranged to store necessary data and to perform required processing. The monitoring system further comprises a tilt sensor, wherein the tilt sensor is arranged for measuring an angle between a normal direction of the mobile monitoring device stretching towards an estimated normal plane of a surface across which the device is maneuvered, and the vertical direction of the mobile monitoring device, such that a more accurate snow depth change in the normal direction may be calculated, by multiplying the snow depth change in the vertical direction with $\cos \theta$, as the mobile monitoring device is maneuvered over a selected snow covered surface.

By measuring the angle between an estimated normal direction and the vertical direction of the mobile monitoring device, which may represent the present inclination of the slope exposed to monitoring, a more accurate snow depth change measurement may be accomplished. The snow depth change is thus measured in the direction along the normal of the mobile monitoring device, instead of along the vertical direction, which better reflects the snow depth change corresponding to a specific position of the mobile monitoring device, especially for measurements conducted across steep ski slopes.

Utilizing the angle between the normal and the vertical direction of the mobile monitoring device to estimate the inclination further contributes to compensating for incorrect estimations due to the height of the mobile monitoring device above the current surface.

The improved snow depth measurement according to the third aspect of the invention may preferably be implemented on any applicable snow monitoring system known in the art, but may likewise with advantage be utilized in conjunction with previously mentioned aspects of the invention.

Other aspects, benefits and advantageous features of the present invention will be apparent from the following description and claims.

Brief Description of the Drawings

The present invention will be more apparent from the accompanying drawings, which are provided by way of non-limiting examples.

Figure 1A is an overview of a varying snow depth monitoring system in accordance with an embodiment of the present invention.

Figure 1B is an overview of a varying snow depth monitoring system in accordance with another aspect of the inventive concept.

Figure 2 shows in an exemplifying manner the varying snow depth monitoring system of Figure 1A in greater detail.

Figure 3 is an exemplifying flow chart of a method for monitoring varying snow depth change, in accordance with a preferred embodiment of the present inventive concept.

Figure 4 is an exemplifying flow chart reflecting the unique steps of the improved snow depth system of Figure 1B.

Detailed Description of the Preferred Embodiments of the Invention

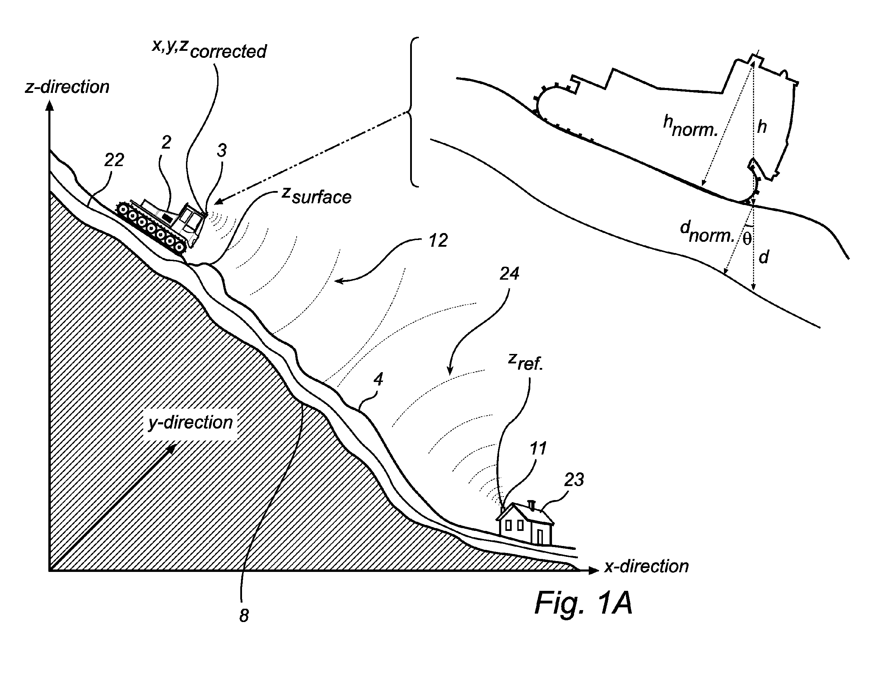

Figure 1A shows in an exemplifying manner a varying snow depth monitoring system 1 in accordance with an embodiment of the present inventive concept.

A slope is shown, with a current snow surface 4, a previous covered snow surface 22 and a ground surface 8.

The snow depth monitoring system 1 comprises a reference altimeter 11, arranged to detect its altitude $z_{ref.detected}$. The reference altimeter 11 is located at a known altitude $z_{ref.known}$, which location preferably is a ski lodge 23 on the mountain in the vicinity of where varying snow depth change d measurements are to be carried out. The location is chosen with respect to exposing the reference altimeter 11 to similar weather and air pressure conditions as apply for the selected area 4 for which varying snow depth change d measurements are to be monitored.

The system 1 further comprises a mobile monitoring device 3 arranged to be maneuvered over the snow-covered slope for monitoring of varying snow depth change d.

The mobile monitoring device 3 is preferably mounted to a vehicle 2, in the example in Figure 1A a slope groomer 2, for instance in the cabin.

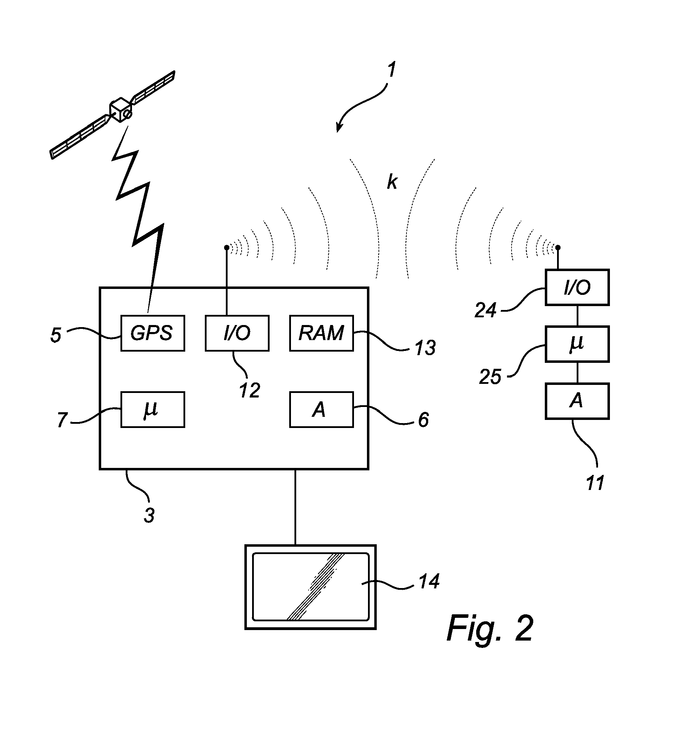

As can be seen in Figure 2, the mobile monitoring device 3 includes a positioning system 5 for determination of the latitude and longitude coordinates x,y, i.e. the position, of the mobile monitoring device 3 as the groomer 2 moves over the selected snow covered area 4. Here, the x- and y-directions are assumed as shown in Figure 1A. Note however, that these directions are arbitrary.

The positioning system 5 is preferably a GPS system, but might also be comprised of any other positioning system.

Further, the mobile monitoring device 3 comprises an air pressure altimeter 6, for detection of a, to the position x,y mentioned above, corresponding altitude $z_{detected}$.

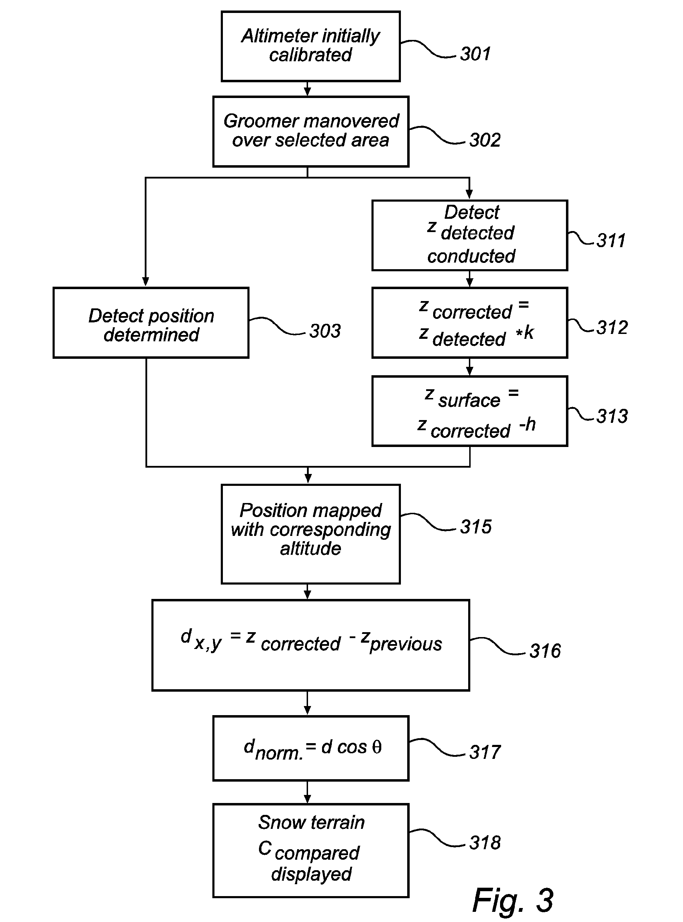

The mobile monitoring device 3 further comprises a processing circuitry 7 for mapping the position x,y of the mobile monitoring device 3 with a corrected altitude $z_{corrected}$ of the corresponding conducted altitude $z_{detected}$. Calculations of $z_{corrected}$ and a $z_{surface}$ will be further described in conjunction with the flow chart of Figure 3 hereinafter.

Further, the mobile monitoring device 3 comprises a memory 13, arranged to store collected data. Note, that in case of real time processing of the data, the memory 13 might be a volatile working memory.

In the example, the processing circuitry 7 and the memory 13 are comprised within the mobile monitoring device 3. It should be noted however, that neither the processing circuitry 7 nor the memory 13 necessarily need to be comprised in the mobile monitoring device 3, but might also be located remotely for remote storing and processing of collected data. The data can then be transmitted employing any suitable transmission system 12,24, although, according to an embodiment, wireless communication is preferred. For instance, communication systems such as radio, GSM, Bluetooth or the like can be used. In the case of remote analyze and/or data storing, the processing circuitry 7 and/or the memory 13 is preferably located in conjunction with the reference altimeter 11, i.e. preferably by the ski lodge 23. Further, if the processing circuitry 7 and/or the memory 13 is located in conjunction with the reference altimeter 11, the processing circuitry 7 and/or the memory 13 are preferably placed inside the ski lodge 23, while the reference altimeter 11 preferably is placed outside. The connection there between could be wired as well as wireless.

In conjunction with the reference altimeter 11, a control unit 25 is, in order to determine calibration data k, arranged to perform calculations with regards to the known altitude $z_{ref.known}$ of the reference altimeter 11 and its detected altitude $z_{ref.detected}$.

According to a preferred embodiment, and as shown in Figure 2, a display 14 may be arranged to visualize a three-dimensional representation of the snow surface terrain. The visualized representation can for instance have the width of the slope groomers 2 plows or tillers effective working width. The display 14 is preferably available within the slope groomer 2, to allow the operator of the groomer 2 to efficiently distribute snow across the selected area in accordance with the varying snow depth change d as presented on the display 14. However, the display 14 might also be located remotely from the mobile monitoring device 3, preferably in conjunction with the processing circuitry 7 and/or the memory 13, in the case either or both of these are placed remotely from the mobile monitoring device 3.

Furthermore, the snow depth monitoring system 1 may alternatively or additionally comprise other presentation devices, such as one or several diodes and/or LEDs. By allowing a certain snow depth change d, or a change d comprised in a certain range, to be represented by illumination of the LEDs in a predefined manner, the operator of the groomer 2 may be assisted in efficiently distributing the snow.

With reference to Figure 3, which is a flow chart of a method for monitoring varying snow depth change d in accordance with a preferred embodiment of the present inventive concept, exemplifying steps of the method will now be described with support from Figure 1A and Figure 2.

Initially, the altimeter 6 in the mobile monitoring device 3 is prior to use in step 301, in accordance with an embodiment, calibrated at a position adjacent to the reference altimeter 11 at the known altitude $z_{ref.known}$, which in the example in Figure 1A is by the ski lodge 23. Preferably, this initial calibration is performed each time a new round of varying snow depth change d measurements is to be carried out.

Next, in step 302, the slope groomer 2, to which the mobile monitoring device 3 is mounted, is maneuvered over the selected surface 4. By mounting the mobile monitoring device 3 to a slope groomer 2, the measurements for a selected area can be conducted meanwhile the groomer 2 is performing grooming operations to the corresponding slope. Subsequently, the varying snow depth change d measurements do not need to be performed as a separate operation, but can be conducted simultaneously with a groomer moving or distributing snow. Alternatively, the vehicle 2 may be a an all-terrain-vehicle, a skier, a snow mobile or any other sort of snow grooming equipment.

In step 303, the positioning system 5 determines the position of the mobile monitoring device 3 in terms of latitude and longitude coordinates x,y. Substantially simultaneously, in step 311, the altimeter 6 in the mobile monitoring device 3 detects the corresponding altitude $z_{detected}$ in that position. Note however, that conducting the altitude $z_{detected}$ not necessarily needs to take place at the exact same time as the corresponding position is conducted, even though preferred.

Due to air pressure altimeters 6, 11 being sensitive to temperature fluctuations, the detected altitude given by the altimeter 6 in the mobile monitoring device 3 may differ from the actual altitude as the weather changes. The purpose of the reference altimeter 11 is thus to supply the altimeter 6 in the mobile monitoring device 3 with calibration data k, i.e. to adjust the conducted altitude to the present weather conditions. Since the altitude $z_{ref.known}$ of the reference altimeter 11 is known, a ratio k between the detected altitude $z_{ref.detected}$ and actual altitude $z_{ref.known}$ can be determined, and used as correction data. Given the altimeter 6 in the mobile monitoring device 3 is within resonable distance from the reference altimeter 11, this ratio k can be assumed to be equivalent for the altimeters 6, 11, why the ratio k determined using the reference altimeter 11 can be used to accurately correct the altitude of the altimeter 6. The ratio k is preferably represented by the known altitude of the reference altimeter 11, divided by the detected altitude of the reference altimeter 11, i.e.

$$k = z_{ref.known}/z_{ref.detected},$$

which ratio k, the altitude $z_{detected}$ conducted by the altimeter 6 in the mobile monitoring device 3 is then, in step 312, multiplied with to obtain a corrected altitude $z_{corrected}$, i.e.

$$z_{corrected} = z_{detected}*k.$$

The calibration data k can further be supplied to the mobile monitoring device 3 employing any suitable transmission systems 12, 24, although, according to one embodiment, wireless communication is preferred. For instance, communication systems such as radio, GSM, Bluetooth or the like can be used.

Preferably, the ratio k is supplied as soon as a change in the weather conditions result in the reference altimeter 11 adjusting its altitude $z_{ref.detected}$. The adjustment will result in an updated corrective factor k, with which the detected altitude $z_{detected}$ of the altimeter 6 in the mobile monitoring device 3 is to be corrected until the corrective factor k once again changes. However, other criteria may also trigger the submissions, for instance the ratio k may be supplied based on time intervals, or on the initiative of an operator.

In step 315, the processing circuitry 7 then maps the position x,y with the corresponding approximate altitude $z_{corrected}$.

By subtracting a current altitude $z_{corrected}$ from a previous value in the same position, $z_{previous}$, a value of change in snow depth, d, in position x, y can be obtained. If the altitude $z_{previous}$ was obtained without any snow, then d will correspond to the snow depth. Note that this procedure results in a depth along the z-axis, i.e. vertically.

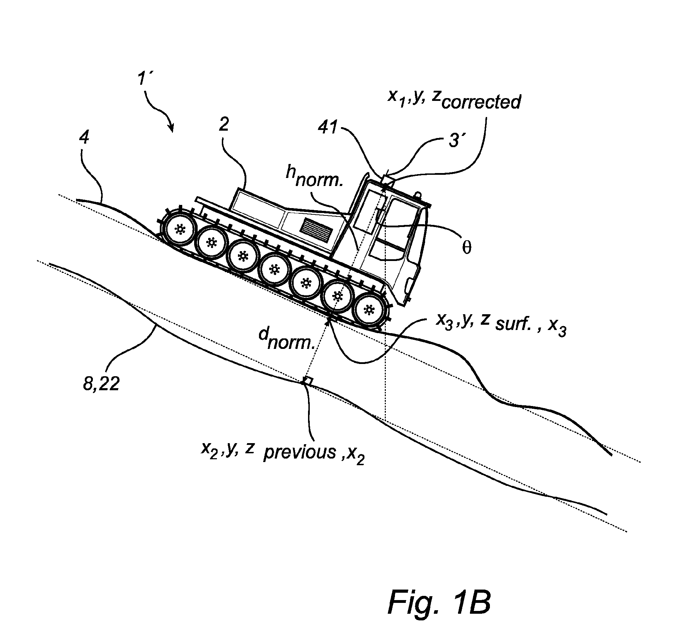

According to a preferred embodiment, the monitoring device may comprise a tilt sensor 41 (see figure 1 B), for instance an accelerometer, which may be mounted to the groomer 2 and preferably even integrated with the mobile monitoring device 3'. The tilt sensor 41 is arranged to determine an angle θ between a normal direction of the mobile monitoring device 3' stretching towards an estimated normal plane of the surface across which said device is maneuvered, and the vertical z-direction. The estimation of angle θ is preferably interpolated utilizing a plurality of running measured θ-values.

Using the determined value of θ, a modified depth, $d_{norm.}$, can be calculated as $d_{norm.} = d \cdot \cos\theta$. It should be noted that this improvement is useful regardless of how the distance d has been determined, i.e. also when this distance has been determined using prior art such as GPS.

Determination of positions x,y are in the example conducted repeatedly, in predefined intervals, in order to determine the variations in the varying snow depth change d across the selected area 4. The recurrent predefined intervals can in accordance with one embodiment be based on time intervals, but might also in accordance with an alternative embodiment be based on the distance the slope groomer 2, to which the mobile monitoring device 3 is mounted, has been maneuvered.

The collected data preferably forms a surface data collection $C_{surface}$ comprising positions x,y and corresponding altitude values $z_{x,y}$. This surface data collection $C_{surface}$ is by the processing circuitry 7 compared to a previous set $C_{previous}$ of the surface data collection which, for the system 1 of Figure 1, corresponds to the same x,y-position of the monitoring device 3.

Note that the altitude $z_{corrected}$ for a specific position $x_1$,y not necessarily needs to have been detected in that specific position $x_1$,y in the previous surface data collection $C_{previous}$, but for instance can constitute an interpolated value.

As the monitoring device 3 is mounted to a groomer 2, it is positioned at a height $h_{norm}$ above the snow surface. Consequently, in order to retrieve an actual approximate snow surface altitude $z_{surface}$, the height $h_{norm}$ may be subtracted from the altitude $z_{corrected}$ in step 313, i.e. $z_{surface} = z_{corrected} - h_{norm}$.

Note that, if the slope exposed to maneuvering is steep in combination with the mobile monitoring device 3 being attached to for instance the roof of the groomer 2, such that h is relatively large, estimating the current snow surface altitude $z_{surface}$ for a position x,y utilizing the above equation might result in an inaccurate value of $z_{surface}$. In order to eliminate this problem, the angel θ can again be used to calculate a distance h in the z-direction, as $h = h_{norm}/\cos\theta$, and $z_{surface} = z_{corrected} - h$.

It can be realized that taking into account the inclination θ, as mentioned above, will result in a certain improvement. However, an even further improvement can be obtained by associating the determined depth $d_{norm.}$ not with the position x,y, but with a position immediately underneath the groomer 2. In other word, to perform the entire measurement in the normal direction, instead of in the z-direction. Such a procedure will now be described in relation to figure 1B.

Figure 1B, shows a monitoring system 1' and mobile monitoring device 3' with the additional inclination detecting functionality described above. Moreover, all parts and functionality comprised within the system of Figure 1 apply to the system of Figure 1B.

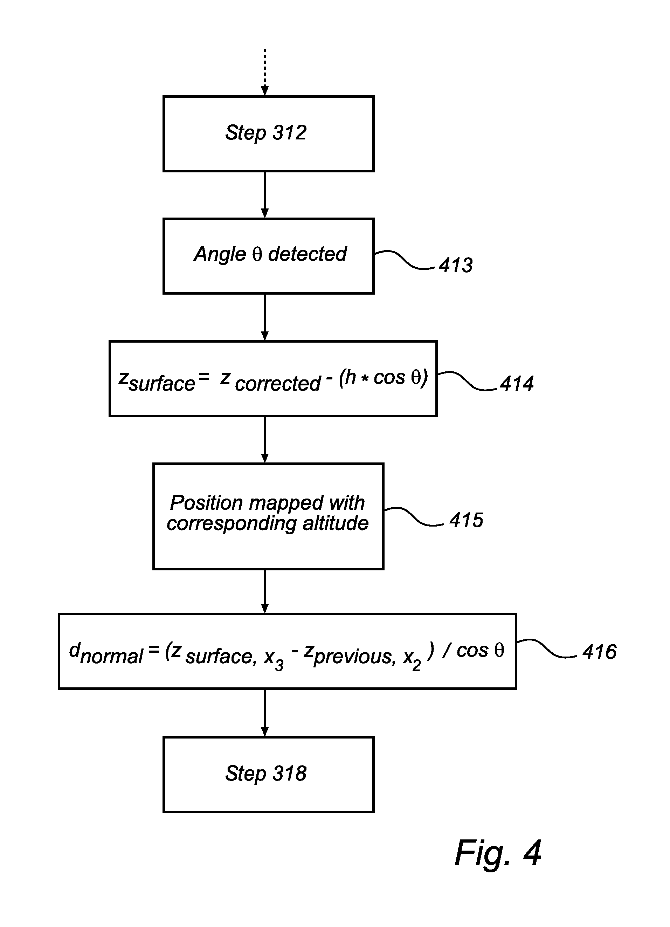

The coordinate $x_1$,y,$z_{detected}$ represents a specific position and the corresponding conducted altitude of the mobile monitoring device 3', and $z_{corrected}$ the adjusted value of $z_{detected}$ as described in conjunction with the embodiment shown in Figure 1A. Not previously shown, $x_2$,y,$z_{previous,x2}$ represents the position and the corresponding altitude previously measured, for instance earlier during the season as described in conjunction with Figure 1A, for the position $x_1$,y of the mobile monitoring device 3' in the normal direction of said device 3' stretching towards a normal plane in the example estimated based on the previous surface data collection set $C_{previous}$. $x_2$,y,$z_{previous,x2}$ thus represents the coordinate where the normal of the device 3' crosses the normal plane representing $C_{previous}$. Further, $x_3$,y, $z_{surface,x3}$ represents the position and corresponding altitude in the position where the normal of the mobile monitoring device 3' with the current position $x_1$,y crosses the current snow surface 4. The distance $d_{norm.}$, finally, is a more accurate approximated snow depth change calculated in a normal direction of the mobile monitoring device 3' stretching towards an estimated normal plane of the surface across which said device is maneuvered, and the vertical direction of said mobile monitoring device 3'. Calculation of $d_{norm.}$ will now be further described in conjunction with the flow chart of Figure 4 hereinafter.

Figure 4 shows the additional steps required to achieve an improved snow depth change measurement, which takes into account the inclination of the slope exposed to monitoring. In the example, only inclination in the x-direction is assumed. Note however, that an inclination existing in the y-direction may likewise be compensated. As previously mentioned, the improved approximation of the position $x_3$,y, in which to measure a surface altitude $z_{surface,x3}$ and subsequently the snow depth change $d_{norm.}$, and the position $x_2,y$ having altitude $z_{previous,x2}$ with which to compare the current surface altitude $z_{surface,x3}$, may be utilized in any snow depth monitoring system known in the art. The improvements may likewise be utilized in the system shown in Figure1A with additional features, why all steps in the flow chart of Figure 3 are applicable for the system of Figure 1B, with the exception of steps 313 to 317, which in the flow chart of Figure 4 are replaced with the steps 413 to 416.

Consequently, coming from step 312 in Figure 3 in which the adjusted altitude $z_{corrected}$ has just been calculated, in step 413 the angle $\theta$ is, for the system 1 of figure 1B, detected with the tilt sensor 41. In step 414, the current surface altitude $z_{surface,x3}$ of position $x_{3,y}$, corresponding to the position $x_{1,y}$ of the mobile monitoring device 3', in the normal direction of the device 3' is approximated, in that

$$z_{surface,x3} = z_{corrected} - (h_{norm} * \cos \theta),$$

where $h*\cos \theta$ is the z-component of $h_{norm}$.

The procedure then continues to step 415, in which the position $x_{3,y}$ and the corresponding altitude $z_{surface,x3}$ are mapped with one another. The coordinate $x_3$ id determined using the x-component of the distance $h_{norm}$.

In step 416, a more precise snow depth change measurement may now be carried out as a result of the improved system described in Figure 1B and Figure 4, which takes into account the inclination of the slope. The altitude $z_{surface,x3}$ of the current surface position $x_{3,y}$ is compared to the corresponding altitude $z_{previous,x2}$ in the position $x_{2,y}$ along the normal of the mobile monitoring device 3', instead of being compared to a previously conducted altitude corresponding to the position $x_{1,y}$ along the vertical direction of the mobile monitoring device 3'. The distance $d_{norm.}$ is calculated by

$$d_{norm.} = (z_{surface,x3} - z_{previous,x2}) * \cos \theta.$$

Consequently, the snow depth change $d_{norm.}$ is measured along the normal of the mobile monitoring device 3', which better reflects the snow depth change $d_{norm.}$ in a specific position $x_1,y$ of the mobile monitoring device 3', especially for measurements conducted across steep ski slopes.

Utilizing the angle $\theta$ to estimate the inclination of the slope further contributes to, as mentioned above, compensating for incorrect estimations caused by the height h of the mobile monitoring device 3' above the current surface 4. As the mobile monitoring device 3,3' is mounted to the groomer 2, likely in the cabin or perhaps on the roof for convenience or improvement of for instance radio reception, the device 3,3' is most likely a certain height h above the surface. Unless utilizing the improved snow depth change measurements described in Figure 1B and Figure 4, and unless the surface which is to be monitored is flat, the greater the height h the greater the inaccurate estimation of the surface position corresponding to the current position $x_1,y$ of the mobile monitoring device 3 will become, especially in steep ski slopes. The system of Figure 1B however, eliminates this issue, as the snow depth change measurement is accomplished in the normal direction instead of the vertical direction of the mobile monitoring device 3'. Consequently, the incorrect position estimations due to the height h of the monitoring system are eliminated, and an even more correct snow depth change estimation measurement is provided.

The steps of Figure 4 are thereby described, and the procedure returns to the flow chart of Figure 3 and step 318.

Returning to Figure 1A for now, which in a two-dimensional exemplifying manner shows the slope reflecting the various snow terrains 8, 22, 4, the compared surface data collection $C_{compared}$ represents the varying snow depth change d variations along different sections of the slope. Correspondingly, the slope represents the current surface data collection $C_{surface}$, and snow terrains 8 and 22 previous surface data collections $C_{previous}$.

It should be obvious to the skilled man that in reality, surface data collections $C_{compared}$, $C_{surface}$, $C_{previous}$ represent three-dimensional, and not two-dimensional, data sets.

The previous altitude - in the example of Figure 1A previous surface data collection $C_{previous}$ - can in accordance with an embodiment be the ground surface 8. This ground surface data $C_{previous}$ is for instance conducted with the mobile monitoring device 3 mounted to a lawn mower mowing the selected area during summer time. The ground surface measurements probably only needs to be conducted once, as the ground surface 8 most likely remains the same.

In accordance with an alternative embodiment, the previous altitude - in the example of Figure 2 previous surface data collection $C_{previous}$ - can be represented by a snow-covered surface 22. This previous snow surface data $C_{previous}$ can for instance be the surface data collection $C_{previous}$ conducted by the slope groomer 2 the day before or earlier in the season.

In the example of Figure 2, the processing circuitry 7 is as previously mentioned comprised within the mobile monitoring device 3. In the case where the processing circuitry 7 in accordance with an alternative embodiment is located remotely however, for instance in a lab, the analysis of the surface data collection $C_{surface}$ is performed remotely. The surface data collection $C_{surface}$ could then preferably be supplied instantly when recurrently conducted from the mobile monitoring device 3. The from the remote analysis resulting compared surface data collection $C_{compared}$, i.e. the varying snow depth change d at the positions conducted at predefined intervals, could then for instance be transmitted in return to the mobile monitoring device 3, and form the basis for grooming operations, i.e. how the slope groomer 2 ought to move or distribute snow from one location where it has accumulated to another which has become bare from use. Additionally, the surface data collections $C_{previous}$, $C_{surface}$ can also be supplied.

The surface data collections $C_{compared}$, $C_{previous}$, $C_{surface}$ are here, according to a preferred embodiment, in step 318 presented as a three-dimensional snow terrain representation on the display 14. The representation can for instance guide the operator of the groomer 2 in how to efficiently distribute snow across the selected area based on the varying snow depth change d as presented on the display 14.

The surface data collection $C_{surface}$ and the resulting compared surface data collection $C_{compared}$ expand and change dynamically as the groomer 2 is maneuvered over the selected area 4, in line with the process flow repeatedly returning to step 302. The procedure continues until the selected area 4 is covered or the operator of the groomer 2 prematurely aborts the measurements.

The present inventive concept has been described above by way of example. Several variants of the present inventive concept are, however, conceivable.

The varying snow depth monitoring system 1 may in addition to slope grooming operations be useful in other non-ski-related environments such as snow removal industries as well as snowmobile trail grooming companies, snowmobile industries, and other snow-related industries where knowing the varying snow depth provides added value, such as for energy companies planning the flow of melting water to their water powered dams.

## Claims

1. A varying snow depth monitoring system (1) comprising
   a mobile monitoring device (3) including a positioning system (5) arranged to determine a position $(x_1, y)$ in terms of longitude and latitude coordinates of said monitoring device, and an altitude gauge (6) arranged to detect an altitude $(z_{detected})$ of said monitoring device in said position, and
   a processing circuitry (7) arranged to compare said detected altitude with a previous altitude at said position, determined from previously recorded altitude data, in order to enable monitoring varying snow depth change (d), as said mobile monitoring device is maneuvered over a selected snow covered surface (4),
   **characterized in that**
   said altitude gauge is an air pressure altimeter,
   said monitoring system further comprises an air pressure reference altimeter (11) positioned at a known altitude (23), and
said processing circuitry is adapted to receive calibration data (k) from said reference altimeter and calibrate said detected altitude based on said calibration data.

2. The varying snow depth monitoring system according to claim 1, wherein said previously recorded altitude data represents the ground surface (8).

3. The varying snow depth monitoring system according to claim 1, wherein said previously recorded altitude data represents a snow covered surface (22).

4. The varying snow depth monitoring system according to any one of the preceding claims, wherein said processing circuitry is comprised in said mobile monitoring device, and adapted to receive said calibration data from the reference altimeter over a wireless communication link (12,24).

5. The varying snow depth monitoring system according to any one of claims 1 to 3, wherein said processing circuitry is located remotely from said mobile monitoring device, and adapted to receive said detected altitude from said mobile monitoring device over a wireless communication link.

6. The varying snow depth monitoring system according to any one of the preceding claims, wherein the system is adapted to determine a plurality of positions and corresponding altitudes at predefined intervals, and said processing circuitry is adapted to store said positions and corresponding altitudes as a surface data collection ($C_{surface}$).

7. The varying snow depth monitoring system according to claim 6, wherein said intervals are based on at least one of time and distance traveled by said mobile monitoring device.

8. The varying snow depth monitoring system according to claim 6 or 7, wherein the system further comprises a presentation device (14), for presentation of the snow surface terrain ($C_{compared}$ and/or $C_{previous}$ and/or $C_{surface}$) based on said surface data collection.

9. The varying snow depth monitoring system according to any one of the preceding claims, wherein the positioning system is a Global Positioning System (GPS).

10. The varying snow depth monitoring system according to any one of the preceding claims, further comprising a tilt sensor (41), arranged for measuring an angle θ between a normal direction of said mobile monitoring device, and a vertical direction, to allow determination of a snow depth change in said normal direction by multiplying the detected snow depth change with cos θ.

11. A method for monitoring varying snow depth, comprising:

determining (303) a position in terms of longitude and latitude coordinates of a mobile monitoring device,
detecting (311) an altitude of said mobile monitoring device in said position using an air pressure altimeter,
calibrating (312,313) said detected altitude using calibration data from a reference air pressure altimeter, located at a known altitude, and
comparing (316) said calibrated altitude with a previous altitude at said position, determined from previously recorded altitude data,
in order to monitor varying snow depth change, as said mobile monitoring device is maneuvered (302) over a selected snow covered surface.

12. The method for monitoring varying snow depth according to claim 11, further comprising:

calibrating (301) said altimeter in said mobile monitoring device at the location of said reference altimeter.

13. The method for monitoring varying snow depth according to claim 11 or 12, wherein said calibration data is received from the reference altimeter over a wireless communication link.

14. The method for monitoring varying snow depth according to any of claim 11 to 13, further comprising:

collecting a plurality of positions and corresponding altitudes at predefined intervals, to form a surface data collection.

15. The method for monitoring varying snow depth according to claim 14, wherein said intervals are based on at least one of time and distance.

16. The method for monitoring varying snow depth according to claim 12 or 13, further comprising:

presenting (318) a representation of the snow surface terrain based on said surface data collection.

17. The method for monitoring varying snow depth according to any of claim 11 to 16, wherein the step of comparing said calibrated altitude with a previous altitude is performed remotely from said mobile monitoring device.

18. The method for monitoring varying snow depth according to any one of claim 11 to 17, further comprising:

detecting an angle θ between a normal direction of said mobile monitoring device, and a vertical direction, and
calculating, based on said angle, a more accurate snow depth change ($d_{norm.}$) in said normal direction by multiplying the detected snow depth change with cos θ.

19. A method for monitoring varying snow depth, comprising:

determining a position in terms of longitude and latitude coordinates of a mobile monitoring device (3'),
detecting an altitude of said mobile monitoring device in said position,
determining a snow depth change in said position by comparing said detected altitude with a previously detected altitude in said position,
detecting an angle between a normal direction of said mobile monitoring device and a vertical direction, and
determining a snow depth change in said normal direction by multiplying the snow depth change in said vertical direction with cos θ.

20. A varying snow depth monitoring system (1') comprising:

a mobile monitoring device including a positioning system arranged to determine a position in terms of longitude and latitude coordinates of said monitoring device, and an altitude gauge arranged to detect an altitude of said monitoring device in said position, and
a processing circuitry arranged to determine a snow depth change in said position by comparing said detected altitude with a previously detected altitude in said position,

**characterized in that**
said monitoring system further comprises a tilt sensor arranged for measuring an angle θ between a normal direction of said mobile monitoring device and a vertical direction,
said processing circuitry is adapted to calculate a snow depth change in said normal direction by multiplying said determined snow depth change with cos θ.

*Fig. 1A*

EP 2 071 281 A1

*Fig. 1B*

Fig. 2

Fig. 3

Altimeter initially
calibrated — 301

Groomer manovered
over selected area — 302

Detect
$z_{detected}$
conducted — 311

Detect position
determined — 303

$z_{corrected} = z_{detected} * k$ — 312

$z_{surface} = z_{corrected} - h$ — 313

Position mapped
with corresponding
altitude — 315

$d_{x,y} = z_{corrected} - z_{previous}$ — 316

$d_{norm.} = d \cos \theta$ — 317

Snow terrain
$c_{compared}$
displayed — 318

Step 312

Angle $\theta$ detected — 413

$z_{surface} = z_{corrected} - (h * \cos \theta)$ — 414

Position mapped with corresponding altitude — 415

$d_{normal} = (z_{surface, x_3} - z_{previous, x_2}) / \cos \theta$ — 416

Step 318

*Fig. 4*

**European Patent Office**

**EUROPEAN SEARCH REPORT**

Application Number

EP 07 12 2751

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | US 5 761 095 A (WARREN LARRY K [US]) 2 June 1998 (1998-06-02) * column 2, lines 12-42; figure 1 * * column 4, lines 21-35; figure 3 * ----- | 1,11,19, 20 | INV. G01C7/04 G01W1/14 |
| A | US 5 646 844 A (GUDAT ADAM J [US] ET AL) 8 July 1997 (1997-07-08) * column 4, line 66 - column 5, line 46; figure 1 * * column 18, line 42 - column 19, line 1; figure 7E * ----- | 1,11 | |
| X | US 2002/116122 A1 (SATONAKA TOSHIHIDE [JP]) 22 August 2002 (2002-08-22) * abstract * * paragraphs [0010], [0029], [0030], [0042] - [0044]; figure 2 * * paragraphs [0046] - [0052]; figure 5 * ----- | 19,20 | |

| | TECHNICAL FIELDS SEARCHED (IPC) |
|---|---|
| | G01C G01W E01H E01C |

The present search report has been drawn up for all claims

| Place of search | Date of completion of the search | Examiner |
|---|---|---|
| Munich | 16 September 2008 | Jakob, Clemens |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

European Patent
Office

Application Number

EP 07 12 2751

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☒ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

**LACK OF UNITY OF INVENTION
SHEET B**

The Search Division considers that the present European patent application does not comply with the requirements of unity of invention and relates to several inventions or groups of inventions, namely:

1. claims: 1-18

    monitoring snow depth by detecting the altitude of a mobile
    monitoring device by means of an onboard barometric
    altimeter calibrated wrt. a reference barometric altimeter
    and by comparing the current altitude with a previous
    altitude.
    ---

2. claims: 19, 20

    monitoring snow depth by detecting the altitude of a mobile
    monitoring device, by correcting it for a measured tilt
    angle and by comparing it with a previous altitude.
    ---

**ANNEX TO THE EUROPEAN SEARCH REPORT
ON EUROPEAN PATENT APPLICATION NO.**                 EP 07 12 2751

This annex lists the patent family members relating to the patent documents cited in the above-mentioned European search report.
The members are as contained in the European Patent Office EDP file on
The European Patent Office is in no way liable for these particulars which are merely given for the purpose of information.

16-09-2008

| Patent document cited in search report | | Publication date | Patent family member(s) | | Publication date |
|---|---|---|---|---|---|
| US 5761095 | A | 02-06-1998 | AU | 6455398 A | 29-09-1998 |
| | | | US | 5930743 A | 27-07-1999 |
| | | | WO | 9840697 A1 | 17-09-1998 |
| US 5646844 | A | 08-07-1997 | AU | 690979 B2 | 07-05-1998 |
| | | | AU | 2246095 A | 10-11-1995 |
| | | | CA | 2184481 A1 | 26-10-1995 |
| | | | DE | 69501401 D1 | 12-02-1998 |
| | | | DE | 69501401 T2 | 06-08-1998 |
| | | | EP | 0756653 A1 | 05-02-1997 |
| | | | JP | 3678426 B2 | 03-08-2005 |
| | | | JP | 9512072 T | 02-12-1997 |
| | | | WO | 9528524 A1 | 26-10-1995 |
| | | | ZA | 9502853 A | 21-12-1995 |
| US 2002116122 | A1 | 22-08-2002 | CA | 2335692 A1 | 13-08-2002 |
| | | | WO | 02072213 A2 | 19-09-2002 |
| | | | WO | 02066747 A1 | 29-08-2002 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5761095 A

- WO 0116560 A